# EUROPEAN PATENT SPECIFICATION

(11) **EP 3 817 186 B1**
(45) Date of publication and mention of the grant of the patent: **18.11.2026**
(21) Application number: 20194376.8
(22) Date of filing: 03.09.2020
(51) Int. Cl.: H02J 50/00, H02J 50/40

(54) **POWER TRANSMISSION DEVICE AND POWER TRANSMISSION/RECEPTION SYSTEM**
LEISTUNGSÜBERTRAGUNGSVORRICHTUNG UND LEISTUNGSÜBERTRAGUNGS-/-EMPFANGSSYSTEM
DISPOSITIF DE TRANSMISSION DE PUISSANCE ET SYSTÈME DE TRANSMISSION/RÉCEPTION DE PUISSANCE

(30) Priority: 01.11.2019 JP 2019199843
(43) Date of publication of application: 05.05.2021
(73) Proprietor: Toshiba Tec Kabushiki Kaisha, Shinagawa-ku Tokyo 141-8562 (JP)
(72) Inventor: KATO, Masakazu, Tokyo 141-8562 (JP); OISHI, Sadatoshi, Tokyo 141-8562 (JP)
(74) Representative: Bandpay & Greuter

(56) References cited:
- JP-A- 2006 128 397
- JP-A- 2017 131 008
- JP-A- 2019 071 762
- US-A1- 2019 207 427

## Description

### FIELD

Embodiments described herein relate generally to a power transmission device and a power transmission/reception system.

### BACKGROUND

In recent years, a power transmission device that performs charging of a battery mounted on a shopping cart or the like in a non-contact manner has been developed. The power transmission device uses a technology for transmitting power in a non-contact. For example, there is a power transmission device that transmits power to a power reception device mounted on a shopping cart in a non-contact manner. In non-contact power transmission, a power transmission device receives power transmitted from a power transmission coil by a reception coil or the like rather than via a wired or other physical connection.

In such non-contact power transmission, when foreign matter such as a metal is present between the power transmission coil and the reception coil, the foreign matter may be heated by a magnetic field generated from the power transmission coil, and a problem may occur. On the other hand, the shopping cart is operated by a general user such as a shopper. Therefore, in a system that performs non-contact power transmission to a power reception device mounted on a shopping cart, the operator needs to confirm that there is no foreign matter between the power transmission coil and the reception coil, but this is difficult for the operator to confirm. JP 2017 131008 A refers to a power transmitter, power receiver and wireless power transmission system. US 2019/207427 Al refers to methods and apparatuses for powering electrical systems onboard carts. JP 22006 128397 A refers to noncontact power supply and its manufacturing method.

### BRIEF DESCRIPTION OF THE DRAWINGS

FIG. 1 is a perspective view illustrating a shopping cart equipped with an electronic
   device that can be supplied with power by a power transmission/reception system according to an embodiment.
FIG. 2 is a perspective view illustrating shopping carts equipped with a power
   reception device according to an embodiment housed at a storage location.
FIG. 3 is a perspective view illustrating an example of a configuration of a power transmission device according to an embodiment.
FIG. 4 is a block diagram illustrating aspects of a control system of a power transmission/reception system according to an embodiment.
FIG. 5 is a perspective view illustrating a part of a shopping cart in a power transmission/reception system according to an embodiment.
FIG. 6 is a perspective view illustrating a part of a power transmission device according to an embodiment.
FIG. 7 depicts aspects of a modification of a guide groove in a power transmission device according to an embodiment.
FIG. 8 illustrates a relationship between a brush included in a power reception device mounted on a shopping cart and a recessed groove according to an embodiment.
FIG. 9 illustrates a relationship between a brush included in a power reception device mounted on a shopping cart and a recessed groove according to an embodiment.
FIG. 10 depicts aspects of a first modified example of the power transmission/reception system according to an embodiment.
FIG. 11 depicts aspects of a second modified example of a power transmission/reception system according to an embodiment.

### DETAILED DESCRIPTION

In general, according to one embodiment, a power transmission-reception system according to the appended claims.

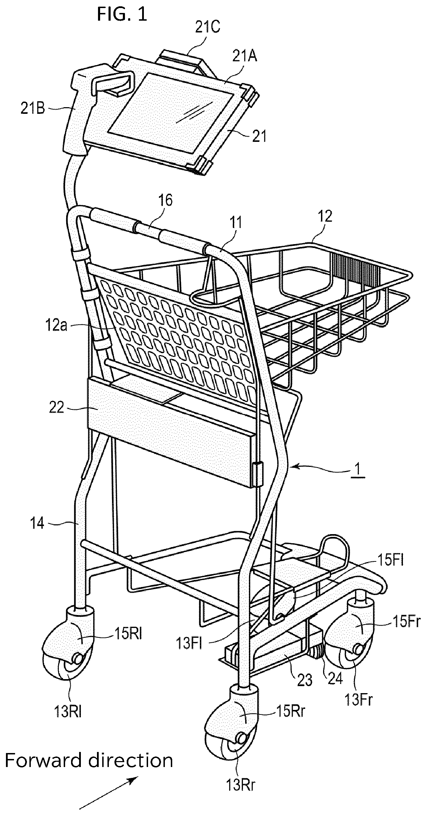

Hereinafter, a power transmission/reception system according to certain example embodiments will be described with reference to the drawings. FIG. 1 is a perspective view illustrating a shopping cart 1 on which a power reception device of a power transmission/reception system according to an embodiment is mounted. Note that the power transmission/reception system (also referred to as a non-contact power supply system in some contexts) is a system including a power transmission system or device (a transmission device) and a power reception system or device (a receiving device) for receiving power transmitted from the transmission device in a non-contact manner. In this context, "non-contact manner" means without a wired or otherwise direct electrical connection between the transmission device/system and the receiving device/system.

A shopping cart 1 (referred to more simply as cart 1) is an example of a movable body equipped with a power reception system that receives power transmitted from a power transmission system. The power reception system is a power reception device that is mounted on a cart 1 and receives power transmitted in a non-contact manner. For example, the power reception system supplies power received in a non-contact manner to an electronic device or a battery mounted on the cart 1. The power transmission system is a power transmission device that transmits power that can be received by the power reception system mounted on a cart 1. For example, the power transmission system is configured to transmit power in a non-contact manner to the power reception system of the cart 1 while the cart 1 is being housed in a storage position (also referred to as a cart storage location).

Further, the battery charged by the power reception system mounted on the cart 1 is, for example, a power supply device that supplies power to an electronic device mounted on the cart 1. The battery may be included in the electronic device mounted on the cart 1.

The battery charged by the power reception system mounted on the cart 1 is, for example, a power supply device that supplies power to an electronic device mounted on the cart 1.

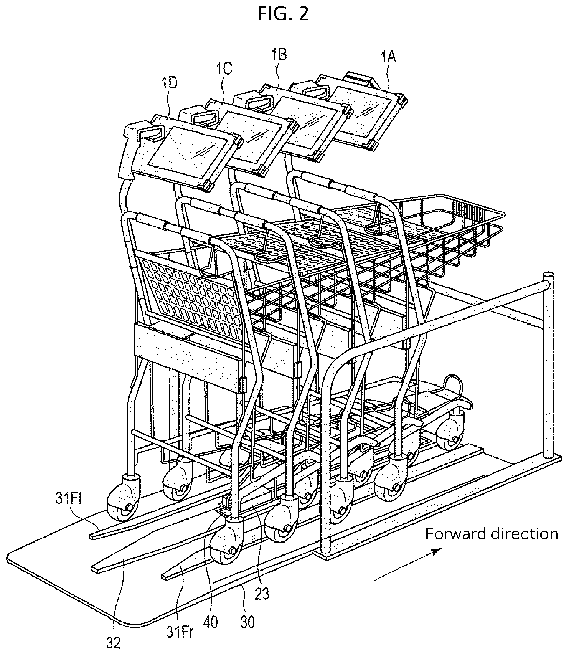

In the configuration example shown in FIG. 1, the cart 1 includes an electronic device 21, a battery 22, and a power receiver 23 attached to a cart body 11. The cart 1 can be moved about while storing a commodity or other items to be purchased. In this example, the cart body 11 stores commodities thereon in a storage basket 12. The electronic device 21 is, for example, a device for providing information or a service to a user of the cart 1. The battery 22 is for operating the electronic device 21. The power receiver 23 receives the power transmitted from an external device (e.g., a non-contact power transmitter 40, see FIG. 2). The power receiver 23 charges the battery 22 with the received power.

Note that the battery 22 may be provided inside the electronic device 21. The battery 22 may include a charge circuit for charging a rechargeable battery with power from the power receiver 23 and the rechargeable battery for storing power. In this case, the battery 22 may be configured to supply the electric power stored in the rechargeable battery to the electronic device 21.

The battery 22 shown in FIG. 1 is more generally a battery case, and replaceable or switchable batteries may be disposed in such a battery case, but in the present description, the battery 22 can be considered to be both the battery case and the batteries therein.

The cart body 11 has a storage basket 12 that houses a commodity therein. The storage basket 12 is supported by a frame 14 provided with four casters 15 (15Fr, 15Fl, 15Rr, 15Rl). The four casters 15 are provided at four corners of the lower portion of the frame 14. Each caster 15Fr, 15Fl, 15Rr, 15Rl respectively has one of a front wheel 13Fr, a front wheel 13Fl, a rear wheel 13Rr, and a rear wheel 13Rl that rotate in a movement direction. The wheel 13 of each caster 15 rotates along the floor surface when the cart body 11 is moved. Further, each caster 15 is configured such that the wheel 13 is freely rotatable to the left or right directions. Accordingly, the cart body 11 can freely change a movement direction.

A handle 16 is provided on a front side of the storage basket 12 on the frame 14. The handle 16 can be gripped by a user. For example, a user grips the handle 16 and moves the cart body 11. In the present embodiment, the direction in which the storage basket 12 is pushed from the handle 16 side is assumed to be a forward direction. The front wheels 13Fr and 13Fl are guided by a guide rail 31 and a guide base 32, which will be described later.

Further, the lower portion of the frame 14 is formed so that the front side is narrower than the rear side. For this reason, the width between the casters 15Fr and 15Fl is narrower than the width between the casters 15Rr and 15Rl. Thereby, when multiple carts 1 are stored in together, the frame of the rearward cart 1 is nested so as to overlap with the frame of the forward cart 1 in the stack (see FIG. 2).

In addition, in the description, it is assumed that the handle 16 side is the rear end side with respect to the storage basket 12, and the opposite side of the storage basket 12 is a front end side. The storage basket 12 has an opening and closing surface 12a (a hinged surface) on its rear end side. The opening and closing surface 12a is hinged so as to swing closed when not supported and to swing open when pushed forward from the handle 16 side. In addition, in the storage basket 12, the front end side surface is smaller than the rear end surface on which the opening and closing surface 12a is provided. Thereby, when multiple carts are stored in together, a rear cart 1 pushes up the opening and closing surface 12a of a previous cart 1. Then, the carts 1 are stored so that each storage basket 12 of the front and rear carts overlaps with each other.

The electronic device 21 (21A, 21B, 21C) is attached to a cart body 11. In the configuration example illustrated in FIG. 1, the electronic device 21 is attached to the handle 16 of the storage basket 12. The electronic device 21 is driven by electric power from the battery 22. For example, the electronic device 21 is an information terminal such as a tablet terminal for providing information to a user, a commodity reader for acquiring information of a commodity selected by a user, a card reader for reading a credit card or a membership card, and the like. The electronic device 21 may be a charging device for charging an electronic device of a mobile terminal (for example, a mobile phone, a smartphone, a digital camera, or the like) carried by the user by the power from the battery 22.

In the configuration example illustrated in FIG. 1, the electronic device 21 is exemplified by a tablet terminal 21A, a commodity reader 21B, and a card reader 21C. The tablet terminal 21A is a computer having a display unit in which a touch panel is provided. The tablet terminal 21A is installed with a display unit facing the user located on the handle 16 side. For example, the tablet terminal 21A displays information of a commodity read by the commodity reader 21B. Further, the tablet terminal 21A may perform a settlement process for a commodity read by the commodity reader 21B.

The commodity reader 21B as the electronic device 21 reads information of a commodity. The commodity reader 21B may include a display unit that displays information of the read commodity. For example, the commodity reader 21B is a scanner that reads commodity identification information such as a bar code attached to a commodity to be taken in and out of the storage basket 12. Further, the commodity reader 21B may be an RFID tag reader that reads an RFID tag attached to a commodity. A card reader 21C as the electronic device 21 is a card reader for reading a credit card, a membership card, and the like owned by a user.

As the electronic device 21, an interface device for connecting a mobile terminal (a smartphone, a tablet terminal, or the like) carried by a user may be provided in place of the tablet terminal 21A. The mobile terminal connected to the interface device as the electronic device 21 may perform the same processing as that of the tablet terminal 21A described above. Further, the interface device as the electronic device 21 may charge a battery included in the mobile terminal. The interface device as the electronic device 21 may be a device that incorporates the battery 22, or may be connected to the battery 22 provided separately from the electronic device 21.

A power receiver 23 is attached to the bottom surface of the cart body 11. The power receiver 23 receives power transmitted from below the cart body 11 in a non-contact manner. The power receiver 23 supplies received power to the electronic device 21 or the battery 22. The power receiver 23 includes a reception coil, a circuit, and the like. The power receiver 23 is installed on the bottom surface of the cart body 11 such that a power reception surface (a surface facing a power transmission coil on a power transmission side) for receiving power from the reception coil is parallel to the power transmission surface (or a floor surface).

Power receiver 23 is placed on or under the bottom of the cart body 11 to receive power transmitted from below the cart body 11. The power receiver 23 receives power output from a power transmitter 40 (see FIG. 2 and the like) installed on an upper surface of a power transmission base 30 (see FIG. 2 and the like). The power receiver 23 is disposed such that the reception coil serving as a power reception surface of the power receiver 23 faces the power transmission coil serving as a power transmission surface of the power transmitter 40 installed on the power transmission base 30.

A brush 24 is attached to an end face in the forward direction of the power receiver 23. The brush 24 is a foreign matter removal member for removing any foreign matter on the top surface of the power transmitter 40. The lower end of the brush 24 is configured to slide on the upper surface of the power transmitter 40 (provided in the power transmission base 30) with movement of the cart body 11.

Next, a configuration of a power transmission/reception system including a power transmission system for transmitting power to a power reception system mounted on the cart 1 configured as described above will be described.

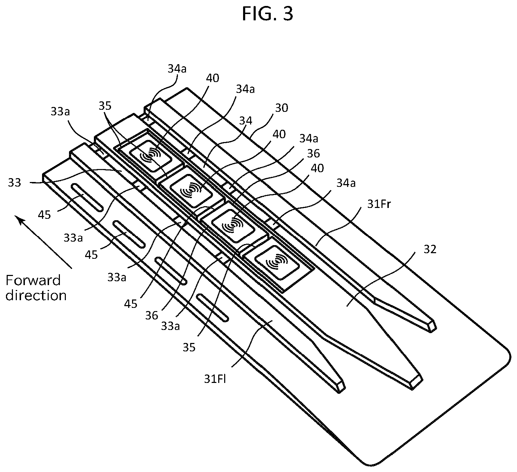

FIG. 2 is a perspective view illustrating a state in which the plurality of carts 1 mounted with a power reception system for receiving power transmitted from the power transmission system according to the embodiment are housed in a storage position. FIG. 3 is a perspective view illustrating a configuration example of a power transmission system according to the embodiment.

As shown in FIG. 2, each cart 1 equipped with the power reception system is housed in a predetermined storage position (a cart storage location). FIG. 2, a state in which four carts 1 (carts 1A, 1B, 1C, and 1D) are housed at the storage position is illustrated, but it is assumed that a plurality of carts 1 can be stored at the storage position in a continuous manner.

At the storage position, the power transmission base 30 is installed on the floor surface. In the power transmission base 30, two guide rails 31 (31Fl, 31Fr) for guiding the left and right front wheels 13Fl and 13Fr and a guide base 32 between the two guide rails 31 are provided. The guide rails 31 are each a guide for guiding the carts 1 to a predetermined position at the storage position. Note that the guide may be any guide that guides the cart to the predetermined storage position.

As shown in FIG. 3, the guide base 32 forms a guide passage 33 between the guide rail 31Fl and itself. The guide passage 33 guides the left front wheel 13Fl. In addition, the guide base 32 forms a guide passage 34 between the guide rail 31Fr and itself. The guide passage 34 guides the right front wheel 13Fr. The guide passages 33 and 34 may be a groove formed by digging down a floor surface.

The guide passage 33 has a plurality of recessed portions (engagement portions) 33a at predetermined pitches P. The guide passage 34 has a plurality of recessed portions (engagement portions) 34a at the predetermined pitches P. The front wheel 13Fl engages with these recessed portions 33a, and the front wheel 13Fr engages with the recessed portions 34a. The positions at which the recessed portions 33a and 34a are set will be described later. The recessed portions 33a and 34a need only be engaged with wheels in order to stop the cart 1 in a predetermined storage position. For example, a bump engaged by wheels may be provided on the guide passages 33 and 34 instead of the recessed portions 33a and 34a.

As shown in FIG. 3, the guide base 32 provided in the power transmission base 30 is embedded with the plurality of power transmitters 40 at a predetermined pitch P. In addition, the guide base 32 has a recessed groove 35 between the power transmitters 40 arranged in the forward direction (movement direction) of the cart 1. Further, the guide base 32 has a recessed groove 36 on the side of each power transmitter 40 in the movement direction of the cart 1. The recessed groove 36 is provided between the side end of each power transmitter 40 and the guide passage 33 and between the side end of each power transmitter 40 and the guide pass 34.

At the storage position, the wheels 13 move along the guide rail 31, and the carts 1 are housed with the front and rear carts overlapping each other. The front side surface of the storage basket 12 in the cart 1 is an opening and closing surface 12a which can open and close at a lower end thereof as a free end. Further, the storage basket 12 is formed to have a smaller surface on the front end side than a surface on the rear end side in which the opening and closing surface 12a. Thereby, when the front end side of the storage basket 12 of the rear cart 1B is pushed into the opening and closing surface 12a of the front cart 1A, the opening and closing surface 12a of the front cart is pushed up. When the cart 1B is pushed further rearward while pushing up the opening and closing surface 12a of the front cart 1A, the storage basket 12 of cart 1B is housed so as to overlap the storage basket 12 of cart 1A.

Further, the frame 14 of each cart 1 is formed so that the rear end side is wide and the front end side is narrow in the left and right direction with respect to the movement direction along the guide rail 31. For this reason, the spacing between casters 15Fr and 15Fl supporting the front wheels 13Fr and 13Fl is a smaller left and right width than the spacing between casters 15Rr and 15Rl supporting the rear wheel 13Rr and 13Rl. Accordingly, when a plurality of carts 1 are housed together in a nested arrangement, the frame 14 of the rear cart 1B is stored so as to overlap with the frame 14 of the front cart 1A.

The power transmitter 40 outputs power that can be received by the power receiver 23 in a non-contact manner. The power transmitter 40 includes an antenna for power transmission, a circuit for power transmission, and the like. The power transmitter 40 is installed toward the bottom surface of the cart body 11 so that the transmission surface from which the power transmission antenna (a power transmission coil 43) outputs power is parallel to the floor surface. The power receiver 23 of the cart 1 is positioned to receive power output from the power transmitter 43 on the upper surface of the power transmission base 30 while being housed along the guide rail 31. The configuration of the control system of the power transmitter 40 will be described later.

In addition, a power transmitter 40 is provided at a position facing the power receiver 23 of each overlapped cart 1 housed at the storage position. In the configuration example shown in FIG. 2, the power receivers 23 of the carts 1 housed at the storage position are arranged at predetermined intervals along the guide rails 31. The power transmitter 40 is arranged at a predetermined pitch P along the guide rail 31 so as to face the power receiver 23 of each cart 1 housed therein. The pitch P is set to coincide with the pitch P at which the recessed portions 33a and 34a are provided. That is, the recessed portions 33a and 34a are set so that the front wheel 13Fl engages with the recessed portion 33a and the front wheel 13Fr engages with the recessed portion 34a when the power transmitter 40 and the power receiver 23 face each other.

The overlapping state of the plurality of carts 1 (1A to 1D) is determined in accordance with the shapes of the frame 14 and the storage basket 12. However, there is a possibility that the intervals between the front and rear of a plurality of carts 1 housed along the guide rail 31 easily deviate from the predetermined distance in accordance with the states of the frame 14 and the storage basket 12, for example. Therefore, the recessed portions 33a and 34a are arranged such that the pitch P is a predetermined distance in the guide rail 31. Accordingly, the front wheels 13Fl and 13Fr of each cart 1 housed in the overlapped state are engaged with the recessed portions 33a and 34a so that the front and rear interval of the housed carts 1 becomes a predetermined distance. As a result, the power receiver 23 of each cart 1 when housed at the storage position is disposed at a position opposed to a power transmitter 40.

Next, the configuration of the control system of the power transmission/reception system will be described. The power transmission/reception system includes a power reception system including a power receiver 23 installed at each cart 1, and a power transmission system including a power transmitter 40 installed corresponding to a position of a cart 1 at a storage position. That is, the power transmission/reception system is a system in which the power transmitter 40 installed in correspondence with the position of the cart at the storage position transmits power to the power receiver 23 installed in each cart in a non-contact manner. In the power transmission/reception system, the power transmitter 40 of the power transmission system wirelessly transmits power without being physically and electrically connected to power receiver 23 of the power reception system. The transmission method is, for example, a magnetic field coupling method, and uses a magnetic field resonance method in which power transmission can be performed between the power transmitter 40 and the power receiver 23 at a distance of about 10mm to 20mm.

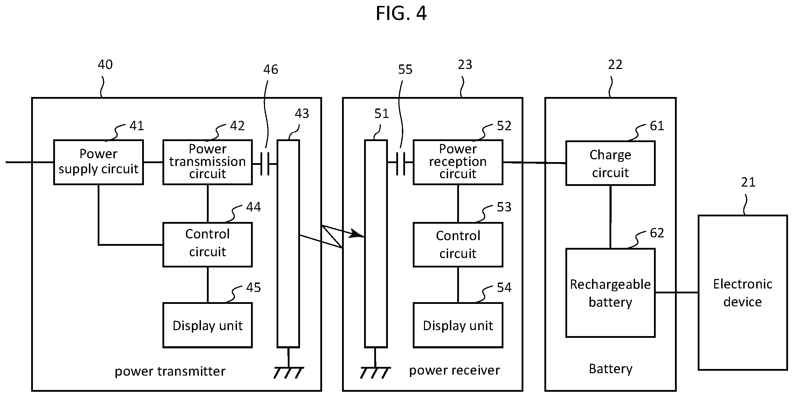

FIG. 4 is a block diagram illustrating a configuration example of a control system of the power transmission/reception system. The power transmission/reception system is a system that transmits power in a non-contact manner, and includes a system on a power transmission side (a power transmission system) and a system on a power reception side (a power reception system). The power transmission system is a system for transmitting power in a non-contact manner to the power receiver 23 on each cart 1 while housed at the storage position. The power reception system is a system for the power receiver 23 to receive power in a non-contact manner and to charge the battery 22 with the received power.

The power transmission system includes a power transmission base 30 installed on a floor surface. The power transmission base 30 has a plurality of power transmitters 40 installed along the guide rail 31 at the storage position.

Direct current power is supplied to each power transmitter 40 through direct current power supply, such as an AC adapter, connected to a commercial power supply. The power transmitter 40 operates in any of a power transmission state in which power is supplied to the power receiver 23 and a standby state in which power is not supplied to the power receiver 23.

In the configuration illustrated in FIG. 4, each power transmitter 40 included in a power transmission system includes a power supply circuit 41, a power transmission circuit 42, a power transmission coil 43, a control circuit 44, a display unit 45, a resonance capacitor 46, and the like. The power transmission coil 43 and the resonance capacitor 46 are connected in series or in parallel.

The power supply circuit 41 converts a voltage of the direct current power supply from the outside into a voltage suitable for an operation of each circuit. The power supply circuit 41 generates electric power for causing the power transmission circuit 42 to transmit power, and supplies the electric power to the power transmission circuit 42. Further, the power supply circuit 41 generates electric power for operating the control circuit 44 and supplies the electric power to the control circuit 44.

The power transmission circuit 42 generates transmission power for transmitting power from the power transmission coil 43. The power transmission circuit 42 supplies the generated transmission power to the power transmission coil 43. For example, based on the control of the control circuit 44, the power transmission circuit 42 generates alternating current (AC) power as the transmission power by switching the direct current (DC) power supplied from the power supply circuit 41.

The power transmission coil 43 outputs power in a form that can be received by the power receiver 23 in accordance with the power supplied from the power transmission circuit 42. The power transmission coil 43 has a planar surface for transmitting electric power. The power transmission surface of the power transmission coil 43 is disposed so as to face the power reception surface of the reception coil 51 of the power receiver 23 in a state parallel to the floor surface.

For example, the power transmission coil 43 constitutes a resonance circuit by being connected in series or in parallel with the resonance capacitor 46. When alternating current power is supplied from the power transmission circuit 42, the power transmission coil 43 generates a magnetic field corresponding to the supplied alternating current power. The power transmission coil 43 may be configured as a winding structure in which an insulated wire is wound, or may be configured as a coil pattern on a printed circuit board.

The display unit 45 is an indicator that indicates the state of the power transmitter 40. The display unit 45 switches the display in accordance with the control of the control circuit 44. For example, the display unit 45 is an LED, and switches turning on, turning off, or a display color according to an operation state of the power transmitter 40. Further, the display unit 45 may be a liquid crystal screen, and the operation state may be displayed as a message.

The control circuit 44 controls an operation of the power transmission circuit 42 and the display unit 45. The control circuit 44 includes a processor and a memory. The processor executes arithmetic processing. The processor performs various types of processing based on a program stored in the memory and data used in the program, for example. The memory stores programs, data used in the program and the like. The control circuit 44 may be constituted by a microcomputer, an oscillation circuit, and the like.

For example, the control circuit 44 switches the display of the display unit 45 in accordance with a state of the power transmitter 40.

Further, the control circuit 44 controls the frequency of the alternating current power output from the power transmission circuit 42 and controls the ON/OFF of the operation of the power transmission circuit 42.

For example, the control circuit 44 controls the power transmission circuit 42 to switch between a state in which the power transmission coil 43 generates a magnetic field (a power transmission state) and a state in which a magnetic field is not generated in the power transmission coil 43 (a standby state).

The control circuit 44 may cause the power transmission coil 43 to intermittently generate a magnetic field, and perform control to change a timing of transmitting electric power.

Note that a wireless communication circuit for performing wireless communication may be provided in the power transmitter 40. For example, the wireless communication circuit is a circuit that performs wireless communication at a frequency different from a frequency of the power transmission. The control circuit 44 may perform the control of each unit by wirelessly communicating with the power receiver 23 by the wireless communication circuit. The wireless communication circuit may perform wireless communication at the same frequency as the frequency of the power transmission by utilizing a load modulation.

Next, the power reception system will be described. The power reception system is a system including a power receiver 23 and a battery 22 mounted on each cart 1. The power receiver 23 includes a reception coil 51, a power reception circuit 52, a control circuit 53, and a display unit 54. In addition, the battery 22 includes a charge circuit 61 and a rechargeable battery 62. However, the power receiver 23 may be configured to include an output terminal for supplying power to the electronic device 21. In this case, the battery 22 may be configured to be charged by the power supplied through the electronic device 21.

The reception coil 51 receives the power transmitted from the power transmission coil 43 and supplies the received power to the power reception circuit 52. The reception coil 51 is formed such that a power reception surface for receiving power is a planar shape. The power reception surface of the reception coil 51 is installed on the bottom surface of the cart body 11 in a state parallel to the floor surface.

For example, the reception coil 51 constitutes a resonance circuit when connected in series or in parallel to the resonance capacitor 55. When the reception coil 51 is in proximity to the power transmission coil 43 of a power transmitter 40, the reception coil 51 electromagnetically couples with the power transmission coil 43. In the reception coil 51, an induced current is generated by the magnetic field output from the power transmission coil 43. The reception coil 51 may be configured as a winding structure in which an insulated wire is wound, or may be formed by forming a coil pattern on a printed circuit board.

The reception coil 51 as a power reception resonance circuit supplies the received alternating current power to the power reception circuit 52. In other words, the reception coil 51 functions as an alternating current power supply while receiving the AC power from the power transmitter 40. In addition, when the magnetic field resonance method is used for the power transmission, the self-resonance frequency of the power reception resonance circuit as the reception coil 51 is configured to be substantially the same as the frequency transmitted by the power transmitter 40. This improves an efficiency of power transmission when the reception coil 51 and the power transmission coil 43 are electromagnetically coupled to each other.

The power reception circuit 52 converts the power received from the reception coil 51 into power that can be supplied to the battery 22 or the electronic device 21. For example, the power reception circuit 52 rectifies the power received from the reception coil 51 and converts the rectified power into direct current. The power reception circuit 52 can be, for example, a circuit including a rectifying bridge constituted by a plurality of diodes. In this case, a pair of input terminals of the rectifier bridge are connected to the power reception resonance circuit including the reception coil 51 and the resonance capacitor 55. The power reception circuit 52 performs full-wave rectification of the power received from the reception coil 51, and outputs the direct current power from a pair of output terminals.

The display unit 54 is a display device that displays various kinds of information. For example, the display unit 54 is an indicator that indicates a state of the power receiver 23. The display unit 54 switches the display in accordance with a control of the control circuit 53. For example, the display unit 54 is an LED, and switches turning on, turning off or a display color depending on the operation state of the power receiver 23. Further, the display unit 54 may be a liquid crystal screen, and the operation state may be displayed as a message.

The control circuit 53 controls the operation of the power reception circuit 52 and the display unit 54. The control circuit 53 includes a processor and a memory. The processor executes an arithmetic processing. The processor performs various types of processing based on the program stored in the memory and data used in the program, for example. The memory stores the programs, the data used in the program and the like. The control circuit 53 may be constituted by a microcomputer, an oscillation circuit, and the like. For example, the control circuit 53 switches the display of the display unit 54 in accordance with the state of the power receiver 23.

Note that the power receiver 23 may be provided with a wireless communication circuit for performing wireless communication with the corresponding power transmitter 40. For example, the wireless communication circuit is a circuit that performs wireless communication at a frequency different from the frequency of the power transmission. The control circuit 53 may perform the control of each unit by wirelessly communicating with the power transmitter 40 by the wireless communication circuit. The wireless communication circuit may perform wireless communication at the same frequency as the frequency of the power transmission by utilizing the load modulation.

The power reception circuit 61 supplies the power from the power reception circuit 52 to the rechargeable battery 62 as charging power. For example, the power reception circuit 61 converts the power from the power reception circuit 52 into a direct current that can be used for charging the rechargeable battery 62. That is, the power reception circuit 61 converts the power from the power reception circuit 52 to a charging power of a predetermined current value and a predetermined voltage value that can be used for charging the rechargeable battery 62, and supplies this converted power to the rechargeable battery 62. The rechargeable battery 62 is charged with the charging power supplied by the power reception circuit 61. The rechargeable battery 62 is connected to the electronic device 21, and thus supplies power to the electronic device 21.

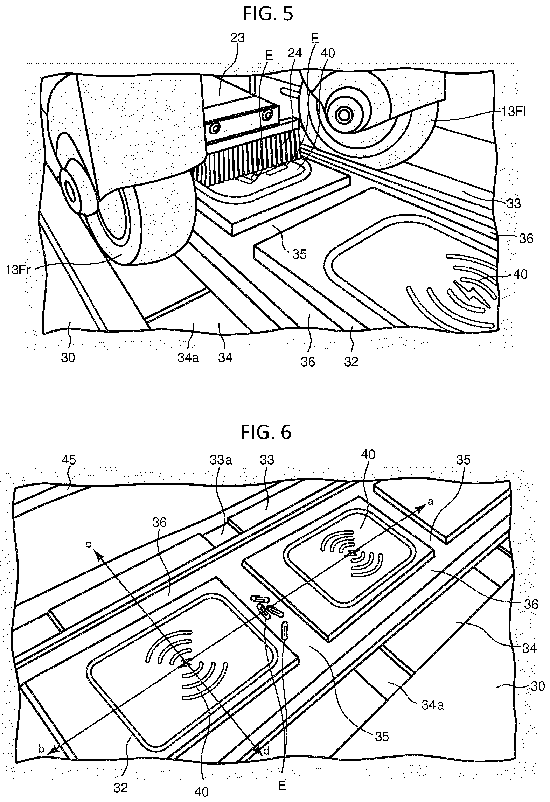

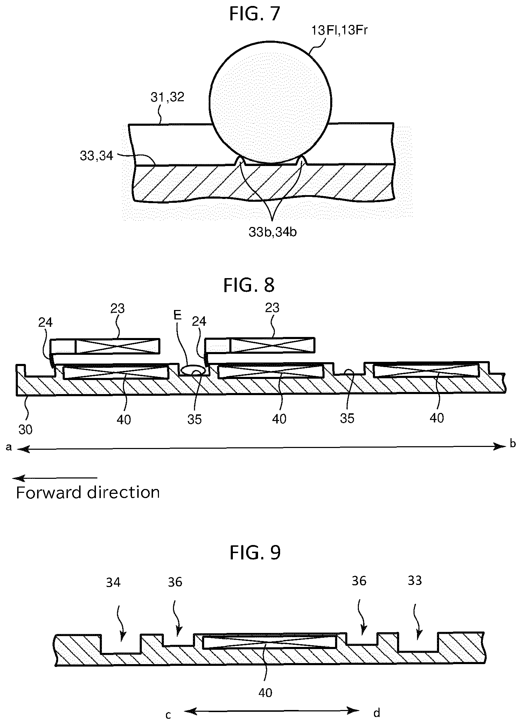

Next, the configuration of the power transmission system including a guide device for guiding a cart 1 to the storage position will be described. FIG. 5 is a perspective view illustrating a part of a cart 1 that moves along the guide device of the power transmission/reception system according to the embodiment. FIG. 6 is a perspective view illustrating a part of the guide device in the power transmission system according to the embodiment. FIG. 7 is a diagram for describing a modification of an engagement portion for engaging wheels of a cart in the power transmission system according to the embodiment.

In the power transmission/reception system according to the present embodiment, the power transmitter 40 transmits power to the power receiver 23 in a non-contact manner. Therefore, the power transmission coil 43 of the power transmitter 40 and the reception coil 51 of the power receiver 23 are opposed to each other at an interval within about 10 to 20mm depending on a size of the coil, and are required to be positioned so that the center positions thereof are within the range of about 10 to 20mm. In the non-contact power transmission, the more accurate the alignment between the power transmission coil 43 and the reception coil 51 is, the higher the transmission efficiency of the power is. For example, the power transmission coil 43 transmits power to the reception coil 51 in a non-contact manner by using magnetic field coupling such as electromagnetic induction or magnetic field resonance. In non-contact power transmission using such magnetic field coupling, it is not possible to efficiently transmit power unless the position of the power transmission coil 43 and the position of the reception coil 51 are aligned with each other.

The power transmission/reception system according to the embodiment is configured such that the power transmitter 40 transmits power to the power receiver 23 provided in the cart 1 housed at the storage position. Therefore, the power transmitter 40 is disposed in a position to match with the position of the power receiver 23 on a cart 1 when the cart 1 is housed at the storage position. The cart 1 can be housed at the storage position with any previously housed cart(s) 1. The cart 1 first housed at the storage position stops with its front wheels engaged with the recessed portions 33a and 34a provided in the guide passes 33 and 34 as shown in FIG. 5and 6.

The recessed portions 33a and 34a serving as the engaging portions do not firmly fix the front wheels of the cart 1, and are set so that the front wheels can be moved away from the recessed portions 33a and 34a by pressing the cart 1 with some strength. For example, if a wheel having a diameter of about 100mm engages a recess having a depth of about 2mm to 3mm, this serves as a sufficient for positioning the cart 1. The engagement portions for engaging the front wheels 13Fl and 13Fr are not limited to the structures of the recessed portions 33a and 34a, and may be formed of a bump 33b and a bump 34b as illustrated in FIG. 7.

The second and subsequent carts 1 engage the second and subsequent portions of the recessed portions 33a and 34a provided in the guide passes 33 and 34. Accordingly, the housed interval between the front and rear carts 1 becomes a predetermined spacing interval (pitch P), and the power receiver 23 of each cart 1 housed at the storage position is also arranged at a predetermined spacing interval (pitch P). Correspondingly, the plurality of power transmitters 40 are arranged on the upper surface facing each cart 1 at an interval corresponding to the predetermined spacing interval (pitch P) between each cart 1 housed at the storage position. Accordingly, the plurality of power transmitters 40 can transmit electric power toward the bottom surface of each cart 1 at a position facing each power receiver 23 of the plurality of carts 1 housed at the storage position.

That is, in each cart 1 on which a battery 22 is mounted, a power receiver 23 including a reception coil 51 is provided so that the power reception surface is parallel to the floor surface on the bottom surface of each cart body 11. In addition, the power transmitter 40 is installed so that the power transmission surface of the power transmission coil 43 is parallel to the floor at a position facing the reception coil 51 of each cart 1 housed at the storage position.

As described above, in the power transmission system according to the embodiment, since the wheels of the cart 1 move along the guide passage then stop at the engagement portion, the carts 1 can each be surely stored at one of the predetermined storage positions. Accordingly, the carts 1 can be housed with the power receivers 23 and the power transmitters 40 being reliably opposed to each other without the cart users being particularly conscious of cart positioning along the guide(s). As a result, power can be reliably supplied from the power transmission device to the power reception device mounted on the carts 1.

Next, a configuration for removing foreign matter between a reception coil on a power reception system side and a power transmission coil on a power transmission system side will be described in the power transmission/reception system according to the embodiment. As shown in FIGS. 5 and 6, the power transmission/reception system according to the embodiment has a configuration that prevents foreign matter E from being left between the reception coil 51 and the power transmission coil 43. In an example shown, a metallic clip is shown as the foreign matter. The power reception system comprises a brush 24 in front of the power receiver 23 with respect to the forward direction of the cart 1. The brush 24 is mounted on the power receiver 23 to brush the top of each power transmitter 40 installed on the guide base 32. The brush 24 moves the foreign matter that is on the upper surface of the power transmitter 40 along with the movement of the cart 1.

The power transmission system in this example comprises a recessed groove 35 and a recessed groove 36 as a foreign matter storage sites in the guide base 32. The foreign matter on the upper surface of the power transmitter 40 is swept into and then accommodated in the recessed groove 35 or the recessed groove 36 by means of the brush 24 moving with the cart 1. That is, the brush 24 of the moving cart 1 sweeps the upper surface of the power transmitter 40 and then deposits the foreign matter into the recessed groove 35 or the recessed groove 36.

FIG. 8 is a diagram illustrating an example of a cross section of the power transmission base 30 in the a-b direction (cart movement direction) illustrated in FIG. 6 and a foreign matter E contained in the recessed groove 35. As shown in FIG. 8, the brush 24 moving in the forward direction on the cart 1 moves the foreign matter E on the power transmitter 40 in the forward direction. Further, the brush 24 then deposits the foreign matter E into the recessed groove 35. In order to reliably deposit the foreign matter E into the recessed groove 35, the brush 24 is positioned and shaped in such a way that it reaches the recessed groove 35 when the cart 1 has been stopped at a predetermined storage position.

With the arrangement shown in FIG. 8, the recessed groove 35 accommodates foreign matter E after it has been swept from the upper surface of the power transmitter 40 by the brush 24. As a result, it is possible to prevent the foreign matter E from entering between a power transmission coil 43 and the reception coil 51 of a cart 1 already housed at the storage position immediately ahead.

It should be noted that the recessed groove 35 may be any shape or be any structure between adjacent power transmitters 40 that accommodates the foreign matter which the brush 24 sweeps in the forward direction from the upper surface of the power transmitter 40. In the example shown in FIGS. 5 and 6, the recessed groove 35 is provided with a groove in a direction orthogonal to the forward direction (the "a" direction) between the power transmitters 40, but the present disclosure is not limited to this.

FIG. 9 is a diagram illustrating a relationship between the recessed groove 36 and the guide passages 33 and 34 shown as a cross section in a c-d direction illustrated in FIG. 6.

As shown in FIG. 9, the recessed groove 36 is formed along the guide passages 33 and 34 between the guide passages 33 and 34 and the side end of the power transmitter 40. The foreign matter on the power transmitter 40 is moved in the forward direction by the brush 24 moving in the forward direction, but may move to the side of the power transmitter 40 depending on the state of the foreign matter. The foreign matter which has moved to the side of the power transmitter 40 is dropped into the recessed groove 36. The recessed groove 36 may be configured to accommodate/receive the foreign matter moved from the upper surface of the power transmitter 40 by the brush 24, between the power transmitter 40 and the guide passages 33 and 34.

Thus, the recessed groove 36 can accommodate the foreign matter that has been removed/pushed/brushed from the upper surface of the power transmitter 40 to the side of the power transmitter 40 by the brush 24 of the cart 1 moving along the guide passages 33 and 34. Also, the recessed groove 36 is provided between the side end of the power transmitter 40 and the guide passages 33 and 34. The presence of the recessed groove 36 can prevent the foreign matter from entering the passages 33, 34, which might hinder the movement the carts 1 along these passages.

With the configuration as described above, the foreign matter E on the power transmission surface of the power transmitter 40 is moved by the brush 24 and guided to the recessed groove 35 or the recessed groove 36. For this reason, in the power transmission/reception system according to the embodiment, there is a low possibility that the power supply is performed with the foreign matter E between the reception coil and the power transmission coil. As a result, it is possible to realize a power transmission/reception system capable of safely performing power transmission in a non-contact manner without generating heat generation or the like due to the presence of foreign matter such as a metal or the like.

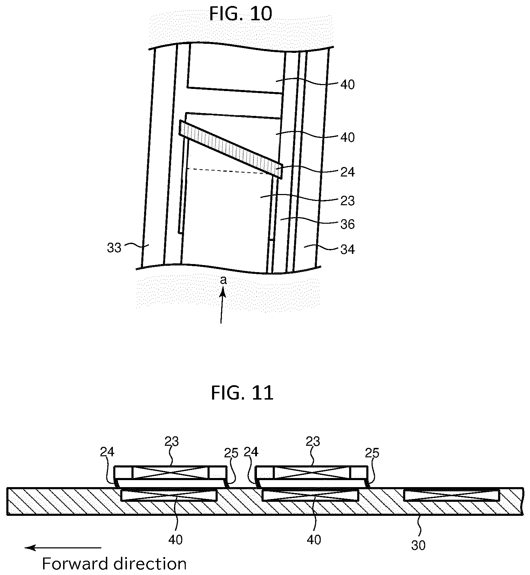

Next, a modified example of the power transmission/reception system according to the embodiment will be described. FIG. 10 is a diagram illustrating a first modified example of the power transmission/reception system according to the embodiment. In the first modified example shown in FIG. 10, the brush 24 is attached forward of the power receiver 23 so as to be oblique (angled) with respect to the forward direction by the guide passages 33 and 34. In the example shown in FIG. 10, the brush 24 is angled with respect to the forward direction ("a" direction) of the cart 1 such that end of the brush 24 near the guide passage 33 leads the end of the brush near the guide passage 34. Furthermore, in this modification, the power transmission device shown in FIG. 10 includes a recessed groove 36 between the power transmitter 40 and the guide passage 34.

In the configuration shown in FIG. 10, when the advancing brush 24 sweeps on the upper surface of the power transmitter 40, the foreign matter on the upper surface of the power transmitter 40 moves in a direction in which the brush 24 is inclined and falls into the recessed groove 36. In this case, it is not required to provide the recessed groove 35 between the adjacent power transmitters 40, or the recessed groove 36 between the power transmitter 40 and the guide passage 33. Even in the configuration of the first modification, the brush may remove foreign matter on the upper surface of the power transmitter, and prevent the foreign matter from entering the guide passage.

It should be noted that the first modification may be configured with the brush 24 angled in the other direction (that is, leading end of brush 24 being on the guide passage 34 side and the trailing end on the guide passage 33 side) with the recessed groove 36 being between the guide passage 33 and the power transmitter 40. In another example, the brush 24 may be configured to move the foreign matter on the upper surface of the power transmitter 40 to both sides of the power transmitter 40 (e.g., a chevron-shaped brush 24), and the recessed groove 36 may be provided between the power transmitter 40 and the guide passages (33 and 34) on both sides of the power transmitter 40.

FIG. 11 is a diagram illustrating a second modified example. In the second modification illustrated in FIG. 11, not only is the brush 24 provided in front of the power receiver 23, but also a brush 25 is provided to the rear of the power receiver 23. According to this second modification, when the cart 1 advances, the brush 24 in front of the power receiver 23 removes the foreign matter on the top surface of the power transmitter 40. Furthermore, when the cart 1 has stopped at a predetermined storage position, the brush 25 behind the power receiver 23 functions to prevent entry of foreign matter from behind. That is, the brush 25 prevents foreign matter being moved by a brush 24 on a subsequent cart 1 from sweeping foreign matter forward and entering between the power receiver 23 and the power transmitter 40 of the already positioned cart 1.

According to the configuration of the second modification, it is possible to prevent foreign matter from entering between the power receiver 23 and the power transmitter 40 by the brushes 24 and 25 arranged at the front and back. Therefore, in the configuration of the second modification example, the power transmission device does not necessarily have to include the recessed groove 35 (see FIG. 3) between the adjacent power transmitters 40, or the recessed groove(s) 36 on the side of each power transmitter 40. However, in the second modified example, the recessed groove 35 may be provided between the power transmitter 40 and likewise the recessed groove 36 may be provided on the either or both sides of each power transmitter 40.

As described above, the power transmission/reception system according to the embodiment includes a power reception device mounted on a cart and a power transmission device that transmits power to the power reception device in a non-contact manner. A power reception device mounted on a cart is provided with a foreign matter removal member, such as a brush, which can be mounted in front of and/or behind the power receiver 23 to sweep the top surface of the power transmitter 40. The power transmission device is provided with a foreign matter storage part, such as a recessed groove, which accommodates foreign matter. The foreign matter storage part can be between adjacent power transmitters 40 arranged along a movement direction of a cart 1, or to one or both sides of each power transmitter 40. Accordingly, in the power transmission device and the power transmission/reception system according to the embodiment foreign matter can be removed from, or prevented from being, between the power transmitter 40 and the power receiver 23 to prevent malfunctions or degradations in performing the non-contact power transmission. As a result, it is possible to provide a power transmission device and a power transmission/reception system capable of preventing a problem such as occurs when a metallic foreign matter is left between a power transmitter coil of a power transmitter 40 and a power receiver coil of a power receiver 23. In such a case, the metallic foreign matter may be heated up during the power transmission process.

Note that the power transmission device according to the embodiment described above can display a charge amount of the battery 22 on the display unit 45 by measuring a current value of the power transmission circuit 42 (see FIG. 4) of the power transmitter 40. Furthermore, the power reception device mounted on the cart may measure a current value of the power reception circuit 52 of the power receiver 23, and transmit the value to the control circuit 44 of the power transmitter 40 via a wireless communication circuit. In this case, the power reception amount on the power reception device side may be displayed on the display unit 45 on the basis of the current value of the power reception circuit 52.

Further, in the above described embodiment, as a method for transmitting power by a non-contact method, a magnetic field resonance method is described, but a magnetic field coupling method including a general electromagnetic induction method may be used. Further, the power transmission/reception system according to the embodiment is not limited to any particular method as long as the power can be transmitted in a non-contact manner.

In the above-described embodiment, the guide rail of the guide device is described as being a groove or slot for limiting movement of the wheel of the cart 1 to be generally along the movement direction. Specifically, the guide device shown in FIG. 3 has an example of a possible a guide groove or guide passage a guide passage formed by a pair of guide members positioned to be sandwiching side surfaces of a wheel. However, in general the guide device may be any device that guides a cart to a predetermined storage position at which a reception coil mounted on a cart will appropriately face a power transmission coil of a power transmission device. For example, the guide rails of the guide device need not all form or provide a wheel guide groove (a wheel guide passage) for guiding movement of wheels with rails/sidewalls on both sides of a wheel, and some of the guide rails may be utilized to guide a wheel from just one side.

In addition, in the configuration example shown in FIG. 3, there is shown a configuration in which a cart previously stored can be taken out first from the nested carts. The example in FIG. 3 depicts an example without a wheel stop or a stopper at the leading end portion of the guide passage. However, in other examples, a wheel stop or a stopper may be provided at a front end portion of a groove formed by a guide rail (a guide passage). The wheel stop may be configured to stop the front wheel of a first or front cart moved along the groove that is first housed in a storage position. The stopper may be a wall surface or the like that stops the front end portion of the cart body in place rather than a wheel particularly. In such a configuration, a cart which is housed last in the nested arrangement must be extracted first.

In the above described embodiment, a shopping cart has been described as an example. However, any cart equipped with a power reception device may be adopted and the present disclosure is not limited to a shopping cart, and may be, for example, a picking cart used in a warehouse or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A power transmission-reception system, comprising:
a plurality of wheeled carts;
a power transmission device, comprising:
a wheel guide for the wheeled cart (1), the wheel guide extending in a first direction;
a plurality of power transmission coils (43) arranged adjacently along the first direction at a spacing interval in the first direction corresponding to spacing between power reception coils (51) on the plurality of wheeled carts (1) when nested in the wheel guide along the first direction; and
a foreign matter storage groove adjacent (35, 36) to each power transmission coil;
**characterized in that**;
each of the plurality of wheeled carts (1) including:
a power reception device (23) on a lower portion of the wheeled cart (1), the power reception device (23) including a power reception coil (51) parallel to a first plane,
a first brush member (24, 25) on the lower portion of the wheeled cart (1) and extending in a downward direction from the lower portion of the wheeled cart (1) wherein the first brush member (24, 25) of each wheeled cart (1) is configured to sweep foreign matter from the planar surfaces of the plurality of power transmission coils (43) into the foreign matter storage groove when the wheeled cart (1) is moved in the wheel guide along the first direction.

2. The power transmission-reception system according to claim **1,** wherein the foreign matter storage groove comprises a first recessed groove (35) between each adjacent pair of power transmission coils (43) in the plurality of power transmission coils (43).

3. The power transmission-reception system according to claim 1 or 2, wherein the foreign matter storage groove comprises a second recessed groove (36) between each power transmission coil (43) in the plurality of power transmission coils (43) and the wheel guide.

4. The power transmission-reception system according to any one of claims 1 to 3, wherein the wheel guide includes engagement portions (33a, 33b, 34a, 34b) for engaging a wheel of the wheeled cart (1), the engagement portions being spaced from each other at an interval corresponding to the spacing interval between the plurality of power transmission coils (43).

5. The power transmission-reception system according to any one of claims 1 to 4, further comprising:
an indicator (45, 54) proximate to the plurality of power transmission coils and configured to indicate whether at least one of the power transmission coils (43) is transmitting power.

6. The power transmission-reception system according to any one of claims 1 to 5, wherein each of the power transmission coils (43) has a substantially planar upper surface at height set to be swept by a brush member (24, 25) on the wheeled cart (1) in the wheel guide.

7. The power transmission-reception system according to any one of claims 1 to 6, wherein the wheel guide comprises a plurality of rails (31).

8. The power transmission-reception system according to claims 1 to 7, wherein the first brush member (24, 25) of each wheeled cart (1) is in front of the power reception coil (51) in the first direction.

## Patentansprüche

1. Leistungsübertragungs-/-aufnahmesystem, umfassend:
eine Vielzahl von Rollwagen;
eine Leistungsübertragungsvorrichtung, umfassend:
eine Radführung für den Rollwagen (1), wobei sich die Radführung in einer ersten Richtung erstreckt;
eine Vielzahl von Leistungsübertragungsspulen (43), die entlang der ersten Richtung angrenzend in einem Abstand in der ersten Richtung angeordnet sind, der einem Abstand zwischen Leistungsaufnahmespulen (51) an der Vielzahl von Rollwagen (1) entspricht, wenn diese in der Radführung entlang der ersten Richtung verschachtelt sind; und
eine Fremdstoffspeicherrille (35, 36) angrenzend an jede Leistungsübertragungsspule;
**dadurch gekennzeichnet, dass**:
jeder der Vielzahl von Rollwagen (1) folgendes beinhaltet:
eine Leistungsaufnahmevorrichtung (23) an einem unteren Abschnitt des Rollwagens (1), wobei die Leistungsaufnahmevorrichtung (23) eine Leistungsaufnahmespule (51) parallel zu einer ersten Ebene beinhaltet,
ein erstes Bürstenelement (24, 25) an dem unteren Abschnitt des Rollwagens (1), das sich von dem unteren Abschnitt des Rollwagens (1) nach unten erstreckt, wobei das erste Bürstenelement (24, 25) jedes Rollwagens (1) konfiguriert ist, um Fremdstoffe von den ebenen Oberflächen der Vielzahl von Leistungsübertragungsspulen (43) in die Fremdstoffspeicherrille zu wischen, wenn der Rollwagen (1) in der Radführung entlang der ersten Richtung bewegt wird.

2. Leistungsübertragungs-/-aufnahmesystem nach Anspruch 1, wobei die Fremdstoffspeicherrille eine erste ausgesparte Rille (35) zwischen jeweils angrenzenden Paaren von Leistungsübertragungsspulen (43) in der Vielzahl von Leistungsübertragungsspulen (43) umfasst.

3. Leistungsübertragungs-/-aufnahmesystem nach Anspruch 1 oder 2, wobei die Fremdstoffspeicherrille eine zweite ausgesparte Rille (36) zwischen jeder Leistungsübertragungsspule (43) in der Vielzahl von Leistungsübertragungsspulen (43) und der Radführung umfasst.

4. Leistungsübertragungs-/-aufnahmesystem nach einem der Ansprüche 1 bis 3, wobei die Radführung Eingriffsabschnitte (33a, 33b, 34a, 34b) zum Eingreifen mit einem Rad des Rollwagens (1) umfasst, wobei die Eingriffsabschnitte in einem Abstand voneinander angeordnet sind, der dem Abstand zwischen der Vielzahl von Leistungsübertragungsspulen (43) entspricht.

5. Leistungsübertragungs-/-aufnahmesystem nach einem der Ansprüche 1 bis 4, ferner umfassend:
einen Indikator (45, 54) in der Nähe der Vielzahl von Leistungsübertragungsspulen, der konfiguriert ist, um anzugeben, ob mindestens eine der Leistungsübertragungsspulen (43) Leistung überträgt.

6. Leistungsübertragungs-/-aufnahmesystem nach einem der Ansprüche 1 bis 5, wobei jede der Leistungsübertragungsspulen (43) eine im Wesentlichen ebene obere Oberfläche aufweist, deren Höhe eingestellt ist, um von einem Bürstenelement (24, 25) an dem Rollwagen (1) in der Radführung gewischt zu werden.

7. Leistungsübertragungs-/-aufnahmesystem nach einem der Ansprüche 1 bis 6, wobei die Radführung eine Vielzahl von Schienen (31) umfasst.

8. Leistungsübertragungs-/-aufnahmesystem nach einem der Ansprüche 1 bis 7, wobei das erste Bürstenelement (24, 25) von jedem Rollwagen (1) in der ersten Richtung vor der Leistungsaufnahmespule (51) ist.

## Revendications

1. Système de transmission/réception de puissance, comprenant :
une pluralité de chariots à roues ;
un dispositif de transmission de puissance, comprenant :
un guide de roues pour le chariot à roues (1), le guide de roues s'étendant dans une première direction ;
une pluralité de bobines de transmission de puissance (43) disposées de manière adjacente le long de la première direction à un intervalle d'espacement dans la première direction qui correspond à l'espacement entre les bobines de réception de puissance (51) sur la pluralité de chariots à roues (1) lorsqu'ils sont emboîtés dans le guide de roues le long de la première direction ;
et une rainure de stockage de corps étrangers adjacente (35, 36) à chaque bobine de transmission de puissance ;
**caractérisé en ce que** :
chacun de la pluralité de chariots à roues (1) comprend :
un dispositif de réception de puissance (23) sur une partie inférieure du chariot à roues (1), le dispositif de réception de puissance (23) comprenant une bobine de réception de puissance (51) parallèle à un premier plan,
un premier élément de brosse (24, 25) sur la partie inférieure du chariot à roues (1) et qui s'étend dans une direction descendante depuis la partie inférieure du chariot à roues (1), dans lequel le premier élément de brosse (24, 25) de chaque chariot à roues (1) est configuré pour balayer les corps étrangers des surfaces planes de la pluralité de bobines de transmission de puissance (43) vers la rainure de stockage de corps étrangers lorsque le chariot à roues (1) est déplacé dans le guide de roues le long de la première direction.

2. Système de transmission/réception de puissance selon la revendication 1, dans lequel la rainure de stockage de corps étrangers comprend une première rainure encastrée (35) entre chaque paire adjacente de bobines de transmission de puissance (43) dans la pluralité de bobines de transmission de puissance (43).

3. Système de transmission/réception de puissance selon la revendication 1 ou 2, dans lequel la rainure de stockage de corps étrangers comprend une deuxième rainure encastrée (36) entre chaque bobine de transmission de puissance (43) dans la pluralité de bobines de transmission de puissance (43) et le guide de roues.

4. Système de transmission/réception de puissance selon l'une quelconque des revendications 1 à 3, dans lequel le guide de roues comprend des parties de mise en prise (33a, 33b, 34a, 34b) destinées à mettre en prise une roue du chariot à roues (1), les parties de mise en prise étant espacées les unes des autres à un intervalle qui correspond à l'intervalle d'espacement entre la pluralité de bobines de transmission de puissance (43).

5. Système de transmission/réception de puissance selon l'une quelconque des revendications 1 à 4, comprenant en outre :
un indicateur (45, 54) à proximité de la pluralité de bobines de transmission de puissance et configuré pour indiquer si au moins l'une des bobines de transmission de puissance (43) transmet une puissance.

6. Système de transmission/réception de puissance selon l'une quelconque des revendications 1 à 5, dans lequel chacune des bobines de transmission de puissance (43) présente une surface supérieure sensiblement plane à une hauteur définie pour être balayée par un élément de brosse (24, 25) sur le chariot à roues (1) dans le guide de roues.

7. Système de transmission/réception de puissance selon l'une quelconque des revendications 1 à 6, dans lequel le guide de roues comprend une pluralité de rails (31).

8. Système de transmission/réception de puissance selon les revendications 1 à 7, dans lequel le premier élément de brosse (24, 25) de chaque chariot à roues (1) se trouve en face de la bobine de réception de puissance (51) dans la première direction.
